# EUROPEAN PATENT APPLICATION

(11) **EP 1 806 823 A1**
(43) Date of publication of application: **11.07.2007**
(21) Application number: 07100171.3
(22) Date of filing: 05.01.2007
(51) Int. Cl.: H02K 3/26, H02K 3/18, H02K 11/00

(54) **Radial-flow electric motor with improvements in the composition of the stator windings.**

(30) Priority: 05.01.2006 IT VI20060006
(71) Applicant: Policante, Franco, 37038 Soave (VR) (IT); Maule, Alessandro, 36100 Vicenza (IT)
(72) Inventor: Policante, Franco, 37038 Soave (VR) (IT); Maule, Alessandro, 36100 Vicenza (IT)
(74) Representative: Bonini, Ercole

(57) **Abstract**

A radial-flow electric motor (1) comprising: a stator (2) which includes a lamination pack (3) containing a plurality of open slots (4) developing in a mainly longitudinal direction, a rotor (5), positioned inside the stator (2), and electrical coupling means which connect the stator (2) to an electrical power supply. The stator (2) comprises a plurality of conductor loops (6), electrically connected to one another, incorporated in a series of printed circuits (7) combined with the lamination pack (3) at the level of the open slots (4).

## Description

The present invention refers to a radial-flow electric motor, so called due to the fact that the flow to the magnetic gap is directed radially with respect to the axis of rotation.

Synchronous electric motors in general and permanent magnet or brushless motors in particular, in addition to asynchronous induction motors, single-phase and three-phase, belong to this category of electric motors.

As is known, a radial-flow electric motor consists of a stator which includes a lamination pack with a plurality of closed or semi-closed slots, each of which develops mainly according to the longitudinal axis defined by the lamination pack.

The stator also includes a plurality of conductor loops, made of a conducting metal such as copper, wound inside the slots obtained in the lamination pack to form coils.

The stator conductor loops are connected to one another and, via coupling means, to the electrical supply line to produce the pole pairs and the stator rotating electromagnetic field.

The electric motor furthermore consists of a rotor contained in the stator, the construction form of which varies according to the type of radial-flow electric motor in question: for example, the rotor of a synchronous motor is different from that of an asynchronous motor.

Therefore, the various types of radial-flow electric motor currently on the market differ in particular due to the rotor, while the stator always has the same construction characteristics as those summed up above.

The invention described here specifically concerns the stator of a radial-flow electric motor.

As said, the conductor loops are arranged inside each of the closed or semi-closed slots, wound on the lamination pack according to different methods.

According to techniques well-known in the sector, the conductor loops are inserted in the slots and wound on the lamination pack manually by an operator or via the use of specific automatic equipment.

In the first case, the main limitation consists in the fact that preparation of the stator is fairly costly due to the considerable time required by the operator to insert the conductor loops.

In the case of automated winding of the loops, the primary limitation derives from the fact that the machinery used is fairly costly and justified only for large-scale production.

In both cases, furthermore, there is the limitation that the conductor loops, once prepared, protrude in an evident manner from the lamination pack, especially in the case of large electric motors.

Said aspect involves an increase in the overall dimensions of the electric motor, always undesirable and clearly conflicting with the market need for compactness, in the light of the fact that the dimensions have an important effect on determination of the economic value of the end product.

There have been attempts to remedy some of the above drawbacks, especially those relating to the laboriousness of the operations to be performed, by recourse to other manufacturing systems, one of which provides firstly for assembly of the conductor loop coils separately and subsequent application thereof to the lamination pack, manually or in automatic mode.

Another technique for assembly of the stator consists initially in winding the conductor loops on a series of separate and distinct cores, each of which comprises in one single body a tooth and a circular crown sector.

The various blocks thus obtained are positioned side by side and permanently connected to one another via coupling means, for example soldering or resin casting.

Lastly, the various coils are connected to one another to produce the required electrical continuity.

However, also these two latter cases entail winding of the conductor loops to a certain extent, with the consequence that the preparation times, although shorter than those required in the cases described previously, remain lengthy, and likewise the cost of the end product remains high.

Another limitation of the known art just described is due to the fact that the producer must have dedicated and very complex equipment to manufacture the electric motor stator, with the inevitable resulting increase in costs.

Last but not least, a further limitation of the electric motors of known type is represented by the fact that it is always necessary to provide for insulation of the conductor loops in the slot and of the part protruding from the lamination pack.

In this regard, there are embodiments of the conductor loops in which these have the form of lines of conductive material provided on printed circuits.

Also this embodiment, however, poses the drawback represented by the need to construct the stator in separate parts on which the printed circuits are placed and which are successively assembled together.

As already explained, to carry out these operations and obtain a stator that has precise dimensions and is resistant to stress, machine tools would be necessary, whose complexity and high costs certainly make it preferable for the manufacturer to give up this embodiment.

The present invention aims to solve the limitations of the known prior art listed above.

More specifically, the main object of the invention presented here is to provide a radial-flow electric motor which is simpler to manufacture than in the known art.

In the context of said object, the invention is designed to reduce, with respect to the prior art, all the other factors involved being equal, the production times and costs, and in particular assembly, of a radial-flow electric motor.

A further object is to produce a radial-flow electric motor which, with the same power output, has smaller overall dimensions with respect to equivalent known motors.

Said objects are achieved by means of a radial-flow electric motor which, in accordance with the contents of the first claim, comprises:
- a stator which includes a lamination pack having a plurality of open slots with mainly longitudinal development;
- a rotor, positioned inside said stator;
- electrical coupling means suitable for connecting said stator to an electrical power supply,
characterised in that said stator comprises a plurality of conductor loops, electrically connected to one another, incorporated in a series of printed circuits combined with said lamination pack at the level of said open slots.

Advantageously, the electric motor of the invention is produced more quickly than motors of known type.

In the invention, in fact, the coils consist of conductor loops incorporated in printed circuits which are immediately integrated with the lamination pack, excluding work processes for winding the wire, location of it in the slots and insulation of the latter, typical of the known art.

This is helped by the fact that in the electric motor of the invention the sections of the conductor loops in the slot and those protruding from the lamination pack are protected and electrically insulated by the printed circuits, hence it is no longer necessary to apply an insulation as in traditional electric motors provided with loops of wound wire.

Actually, the use of stators with open slots is known as a technique for the construction of motors, but it has been abandoned many years ago and hasn't been taken in consideration any longer, due to its lower efficiency compared to the use of stators with closed or semi-closed slots.

However, the combined use of stators with open slots and loops provided on printed circuits advantageously makes it possible to construct motors at considerably lower costs compared to those obtained with any known technique, thus justifying and going beyond the loss of efficiency mentioned above.

Equally advantageously, the electric motor protected here is more compact than the state of the prior art, while maintaining the same performance parameters, for example the rated power.

Said aspect is extremely important in the light of the applications of some types of radial-flow electric motor, such as brushless motors, in which the area for their installation is increasingly limited in order to save space and reduce overall dimensions.

Further characteristics and particular features of the radial-flow electric motor claimed here will be better understood from the description of a preferred embodiment of the invention provided by way of indication in relation to the following drawings in which:
- fig. 1 shows the electric motor of the invention in a simplified partially exploded axonometric view;
- fig. 2 shows a detail of fig. 1 in cross section;
- fig. 3 shows the detail of fig. 2 in an internal axonometric view;
- fig. 4 shows a detail of fig. 3 in an axonometric view;
- fig. 5 shows the detail of fig. 4 in an exploded view.

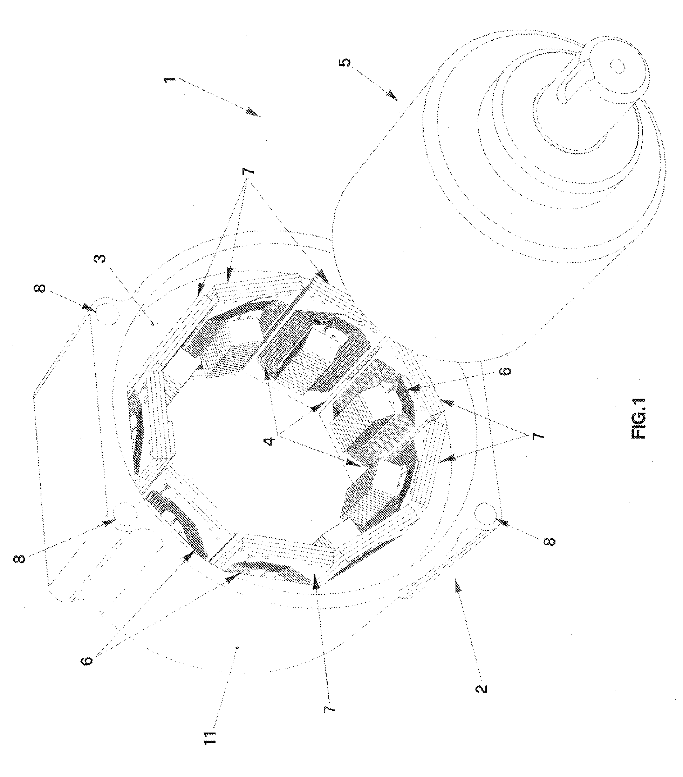

The radial-flow electric motor of the invention is illustrated in fig. 1, indicated overall by **1,** where it constitutes, solely by way of example, a permanent magnet or brushless motor.

As can be seen, it comprises:
- a stator **2** which includes, according to consolidated practice, a lamination pack **3** containing a plurality of open slots **4** developing in a mainly longitudinal direction;
- a rotor **5** positioned inside the stator **2;**
- electrical coupling means, for convenience not shown in the following drawings, used to connect the stator **2** to the electrical power supply.

In accordance with the invention, the stator **2** comprises a plurality of conductor loops **6,** electrically connected to one another, incorporated in a series of printed circuits, each of which is numbered by **7,** combined with the lamination pack **3** at the level of the open slots **4.**

The electric motor **1,** in its definitive configuration, also comprises a casing **11** which surrounds the stator **2,** closed at the ends by a pair of flanges applied to it by means of fixing means, for example screws, positioned in the blind holes **8.**

The flanges and the fixing means are of the type usually used for this type of electric motors and, for the sake of simplicity, are not illustrated in the attached drawings, since they do not constitute important construction elements for the purposes of the inventive concept expressed by the present invention.

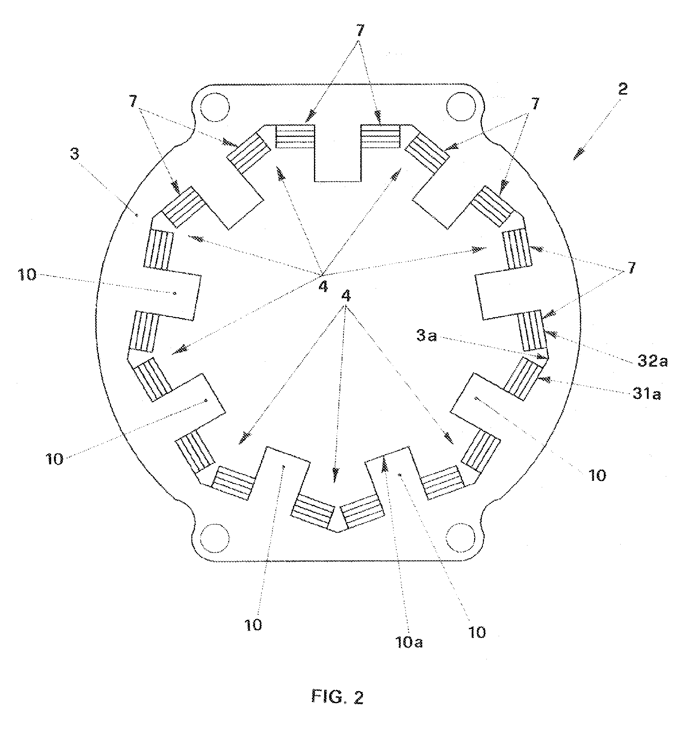

As shown in fig. 2, each of the open slots **4** has an open form and a cross section profile substantially in the shape of an irregular pentagon.

The inner wall **3a** of the lamination pack **3** consists of flat sections **31a, 32a** facing the printed circuits **7.**

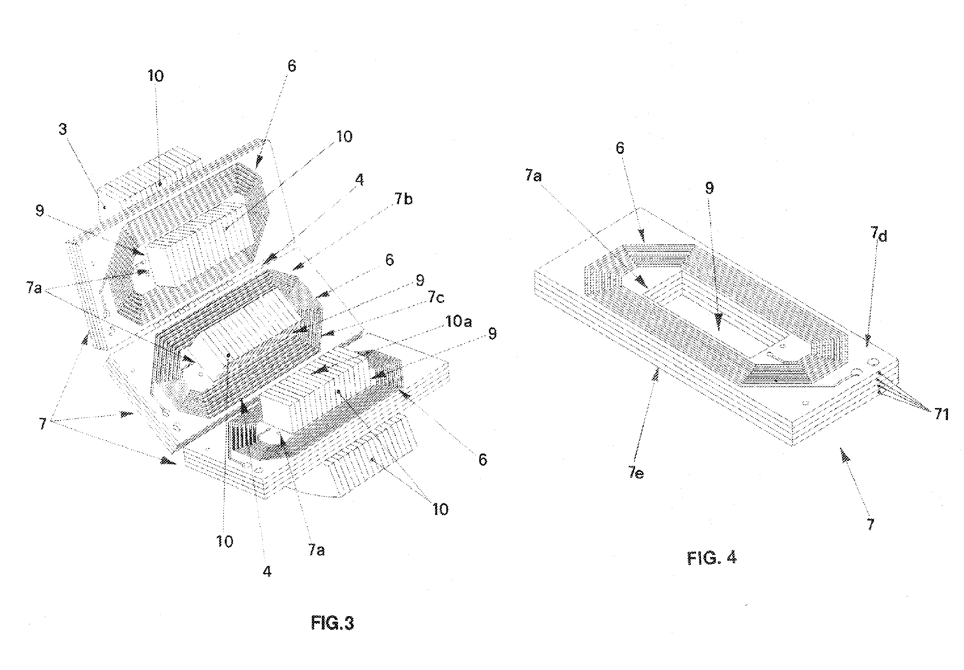

Each of the printed circuits **7** presents in the central area 7a a through aperture **9** with closed profile, which can be seen better in fig. 4.

According to the preferred embodiment of the invention described here, the printed circuits **7** are permanently precision-coupled with a plurality of longitudinal teeth **10** protruding from the inner wall **3a** of the lamination pack **3,** each of which is inserted in the through aperture **9.**

Preferably, furthermore, the printed circuits **7** are further connected to the lamination pack **3** via the application of adhesive substances, not visible, consisting of a resin bath, to increase the mechanical stability thereof.

It is underlined, however, that in the invention the adhesive substances are applied to the lamination pack, complete with printed circuits, only for precautionary purposes.

Application of the adhesive substances in the electric motor of the invention is not, in fact, in any way binding and necessary as in the known electric motors, since one of the main functions of said substances in these applications, i.e. protection of the coils against external agents, is already provided by the printed circuits.

The above obviously represents a considerable advantage in terms of timescales for execution and, in the last analysis, costs to be sustained.

Each of the printed circuits **7** is ring-shaped and has a first section **7b** contained inside one of the open slots **4** and a second section **7c** contained inside the adjacent open slot so that each of the conductor loops **6** surrounds each of the longitudinal teeth **10.**

Preferably, the stator **2** comprises only one of said printed circuits **7** for each of the longitudinal teeth **10.**

In further construction solutions of the invention, not shown in the drawings below, the stator can comprise more than one printed circuit for each of the longitudinal teeth.

This will depend on the construction choices and on the performance, in terms of rated power and rated angular velocity, required of the electric motor.

Each of the longitudinal teeth **10** has in cross section a profile in the form of a regular polygon which, in the case in point, purely by way of indication, is rectangular.

It is obvious, furthermore, that in other variations of the invention, not shown, open slots and teeth can be produced with different profile in cross section, but always observing magnetic relations known per se.

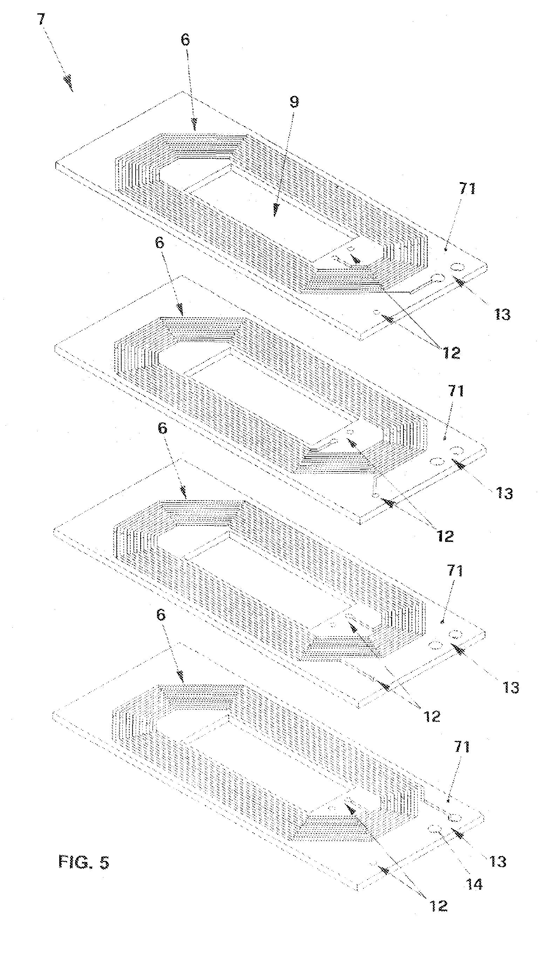

As can be seen in fig. 4 and 5, each of the printed circuits **7** consists of several layers **71,** on each of which are provided, by deposit or chemical removal, several conductor loops **6.**

In other construction variations, not shown in the following drawings, each layer of each printed circuit can have a conductor loop.

Each of the printed circuits **7** has a plurality of electrical interconnection paths **12,** at the level of which the conductor loops **6,** combined with the layers **71** of each of the printed circuits **7,** are electrically connected to one another.

In the example, the conductor loops **6** of the various layers **71** are connected in series to one another but it is clear that other circuit variations can be used, for the sake of simplicity not illustrated, in which the loops are connected in parallel or by means of a series-parallel combination.

Each of the printed circuits **7** has, furthermore, a plurality of electrical connection points **13** towards the outside, preferably but not necessarily consisting of pads positioned at the level of metallised through holes **14.**

The electrical connection points **13** receive the terminals of the electrical circuit determined by interconnection of the loops **6** of the layers **71** of each of the printed circuits **7.**

The printed circuits **7** are connected to one another by means of electrical connections, not shown and applied at the electrical connection points **13** of the terminals of the above-mentioned circuit to produce a stator winding system.

It should be noted in any case that the construction details of the printed circuits used in the invention, especially the connection between the various layers, represent conventional state of the art in the production of multilayer printed circuits.

In this case, the lateral faces **7d, 7e** of each of the printed circuits **7** are flat and guarantee that said printed circuits are fully supported by the inner wall **3a** of the lamination pack **3.**

Coupling of the printed circuit **7** with the inner wall **3a** of the lamination pack **3** determines a thermal contact superior to the one generated by the conductor loop coils present in the electric motors of known type.

In a further construction form of the invention, not illustrated, one or more of the printed circuits can be provided on the outer surface with a thermal probe for detecting the temperature conditions inside the radial-flow electric motor.

A further construction solution of the electric motor of the invention, not shown, can feature printed circuits without a section at the level of one of the heads, substantially U-shaped and not in a closed loop as previously, so as to provide communication between the central through aperture and the outside.

In this case, the conductor loops will be joined together by means of electrical connections of the interrupted loop interconnection paths.

This executive form permits lateral coupling of the printed circuits with the longitudinal teeth of the lamination pack instead of frontally as in the executions described previously.

In the preparation phase, the operator precision-couples each of the printed circuits **7** with the respective longitudinal teeth **10** protruding from the inner wall 3a of the lamination pack **3.**

Figures 1, 2 and 3 show, in particular, that the printed circuits **7** are positioned side by side along the inner wall **3a** of the lamination pack **3** and each of them has the first section **7b** positioned in one of the open slots **4** and the second section **7c** positioned in the adjacent open slot **4.**

The operator then connects via electrical connections, applied at the level of the connection points **13,** the terminals of the electrical circuit of the various printed circuits **7** to form the pole pairs according to the required pattern.

Preparation of the electric motor **1** will therefore be completed according to the usual practice for any motor of known type, assembling the casing **11,** the side flanges and the coupling means, not illustrated here.

As can be deduced from what has just been said in relation to the preparation phase, production of the electric motor of the invention is easier than in the known art, since the conductor loop coils are not inserted in the lamination pack, a construction technique adopted up to now.

The invention furthermore allows for a more compact radial-flow electric motor with respect to motors of known type, maintaining the same performance.

In the electric motor of the invention it is no longer necessary to provide for insulation of the conductor loops in the slot and the part that protrudes from the lamination pack, as happens in the prior art.

On the basis of what has been said, it can be seen that the radial-flow electric motor of the invention, improved in the composition of the stator windings, achieves the objects and obtains the advantages mentioned previously.

In the executive phase, modifications may be made to the electric motor of the invention consisting, for example, in a different front view form of the printed circuits.

The printed circuits can be of any dimensions and will depend on the efficiency and overall dimensions required of the motor, in addition to the application constraints to be taken into consideration.

Furthermore, the printed circuits can be shaped in the manner most suitable for optimising the space occupied by them inside the open slots of the lamination pack.

In addition to this, executive variations of the invention can exist which provide for printed circuits consisting of one single layer.

Lastly, the section and number of conductor loops for each layer, in addition to the number of layers of the printed circuit, can be increased or reduced as required, according to the efficiency and rated power required of the motor.

It should also be noted that the solution idea proposed here can be valid and applicable also to other types of radial-flow electric motors, such as synchronous or asynchronous induction motors.

In the cases where the technical characteristics illustrated in the claims are followed by references, these have been added only with the aim to facilitate the comprehension of the claims themselves and therefore said references do not have any limiting effect on the degree of protection to be granted to each element they identify only by way of example.

All the variations described and referred to, but not shown in the attached drawings, must be considered protected by the present patent, since they fall within the scope of the inventive concept expressed by the following claims.

## Claims

1. Radial-flow electric motor (1) comprising:
- a stator (2) which includes a lamination pack (3) containing a plurality of open slots (4) developing in a mainly longitudinal direction;
- a rotor (5), positioned inside said stator (2);
- electrical coupling means suitable for connecting said stator (2) to an electrical power supply,
**characterised in that** said stator (2) comprises a plurality of conductor loops (6), electrically connected to one another, incorporated in a series of printed circuits (7) combined with said lamination pack (3) at the level of said open slots (4).

2. Motor (1) according to claim 1) **characterised in that** each of said printed circuits (7) consists of one or more layers (71), each of which is combined with at least one of said conductor loops (6).

3. Motor (1) according to claim 2) **characterised in that** each of said printed circuits (7) presents a plurality of electrical interconnection paths (12) at the level of which said conductor loops (6) combined with said layers (71) of each of said printed circuits (7) are electrically connected to one another.

4. Motor (1) according to claim 1) **characterised in that** each of said printed circuits (7) presents a plurality of electrical connection points (13) towards the outside.

5. Motor (1) according to claim 4) **characterised in that** said electrical connection points (13) receive the terminals of the electrical circuit determined by the interconnection of said loops (6) of said layers (71) of each of said printed circuits (7).

6. Motor (1) according to claim 5) **characterised in that** said printed circuits (7) are connected to one another by means of electrical connections, applied to said electrical connection points (13), of said terminals of said circuit to produce a stator winding pattern.

7. Motor (1) according to claim 1) **characterised in that** each of said printed circuits (7) is ring-shaped.

8. Motor according to claim 1) **characterised in that** each of said printed circuits is substantially U-shaped.

9. Motor (1) according to claim 1) **characterised in that** each of said printed circuits (7) presents in the central area (7a) a through aperture (9) with closed profile.

10. Motor (1) according to claim 9) **characterised in that** said printed circuits (7) are permanently coupled with a plurality of longitudinal teeth (10) protruding from the inner wall (3a) of said lamination pack (3), each of which is inserted in said through aperture (9).

11. Motor (1) according to claim 10) **characterised in that** said stator (2) comprises one or more of said printed circuits (7) for each of said longitudinal teeth (10).

12. Motor (1) according to claim 10) **characterised in that** each of said longitudinal teeth (10) presents in cross section a profile in the shape of a regular polygon.

13. Motor (1) according to claim 10) **characterised in that** each of said printed circuits (7) presents a first section (7b) contained inside one of said open slots (4) and a second section (7c) contained inside the adjacent open slot (4) so that each of said conductor loops (6) surrounds each of said longitudinal teeth (10).

14. Motor (1) according to claim 1) **characterised in that** each of said open slots (4) presents in cross section a profile substantially in the shape of an irregular pentagon.

15. Motor according to claim 1) **characterised in that** at least one of said printed circuits is provided on the outer surface with a thermal probe.

16. Motor (1) as claimed in claim 1) **characterised in that** said printed circuits (7) are permanently connected to said lamination pack (3) by means of adhesive substances.

17. Motor (1) according to claim 16), **characterised in that** said adhesive substances consist of a resin bath.
